(19) Europäisches Patentamt / European Patent Office / Office européen des brevets

(11) **EP 2 379 380 B1**

(12) **EUROPEAN PATENT SPECIFICATION**

(45) Date of publication and mention
of the grant of the patent:
**19.10.2016 Bulletin 2016/42**

(51) Int Cl.:
***B60T 8/172*** *(2006.01)*

(21) Application number: **08876141.6**

(22) Date of filing: **23.12.2008**

(86) International application number:
**PCT/IT2008/000787**

(87) International publication number:
**WO 2010/073272 (01.07.2010 Gazette 2010/26)**

(54) **METHOD AND SYSTEM FOR DETERMINING THE POTENTIAL FRICTION BETWEEN A VEHICLE TYRE AND A ROLLING SURFACE**

VERFAHREN UND SYSTEM ZUR ERMITTLUNG DER POTENZIELLEN REIBUNG ZWISCHEN EINEM FAHRZEUGREIFEN UND EINER LAUFFLÄCHE

PROCÉDÉ ET SYSTÈME DE DÉTERMINATION DU FROTTEMENT POTENTIEL ENTRE UN PNEU DE VÉHICULE ET UNE SURFACE DE ROULEMENT

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**26.10.2011 Bulletin 2011/43**

(73) Proprietors:
• **Pirelli Tyre S.p.A.**
**20126 Milano (IT)**
• **Politecnico di Milano**
**20133 Milano (IT)**

(72) Inventors:
• **MELZI, Stefano**
**I-20156 Milano (IT)**
• **BRAGHIN, Francesco**
**I-20156 Milano (IT)**
• **CHELI, Federico**
**I-20156 Milano (IT)**

(74) Representative: **Tansini, Elio Fabrizio et al**
**Bugnion S.p.A.**
**Viale Lancetti 17**
**20158 Milano (IT)**

(56) References cited:
**EP-A- 0 887 211          EP-A- 1 568 518**
**WO-A-03/082644          WO-A-2008/065465**
**WO-A1-03/066400        US-A1- 2002 166 373**

## Description

FIELD OF THE INVENTION

The present invention relates to a method of determining the potential friction between a vehicle tyre and a rolling surface.

The invention also pertains to a system for determining said potential friction.

Analysis and monitoring of the interaction between the tyres of a vehicle and the rolling surface on which they operate during use, can provide useful information to the vehicle driver as a help to driving and/or can give useful information to automatic control systems with which the vehicle can be equipped.

The European Patent Application EP 1897706 discloses a technique giving an evaluation of the conditions of a road on which a tyre is rolling.

In this document it is disclosed how, through processing of the vibrations to which the tyre is submitted in different domains (pre-leading domain, contact patch domain, post-trailing domain), it is possible to determine whether the road is a road with a high, medium or low-friction coefficient.

However, in said patent application, no teaching is given as to determination of the so-called "potential friction".

The potential friction is defined as the ordinate of the absolute-maximum point in a friction/slippage curve.

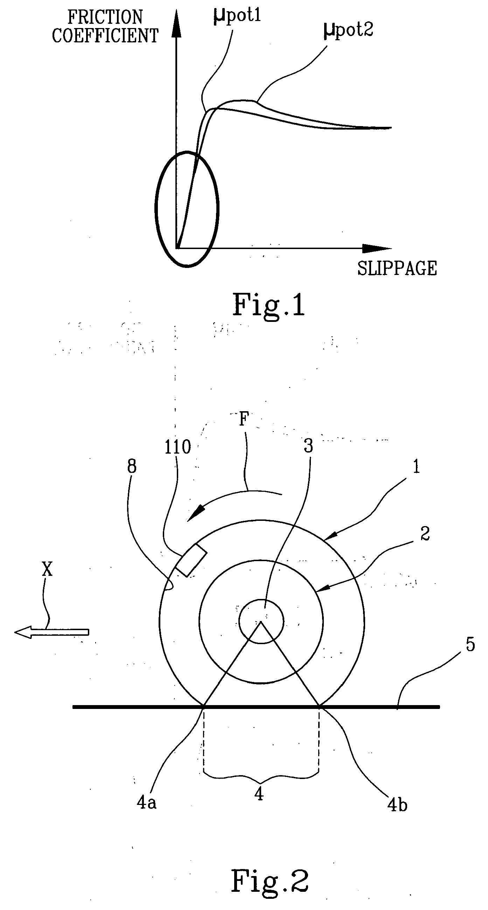

Fig. 1 represents the course of the friction coefficient between tyre and rolling surface as a function of slippage.

On varying the operating conditions of the tyre (for instance, vertical load acting on the tyre, tyre pressure, speed, wear, etc.), the tyre features, and the features of the rolling surface, the relation between slippage and friction is described by a different curve, and correspondingly there is a different potential friction ($\mu$pot1, $\mu$pot2).

Practically, the potential friction identifies a limit condition beyond which the tyre starts losing grip, until an asymptotic condition is reached at which, even if slippage increases, the friction coefficient keeps substantially constant and lower than the maximum friction (i.e. the potential friction itself).

Presently the potential friction can be determined through an ABS encoder, for example.

However, this datum could be really detected through a braking bringing the vehicle close to the condition of full grip loss, i.e. with high slippages.

In fact, the friction/slippage curves relating to different conditions corresponding to different potential frictions, gather close to the origin, almost overlapping each other, and make it difficult and not very reliable to carry out a low-slippage analysis (i.e. in a region close to the origin of the graph, as highlighted in Fig. 1).

WO 2008/065465 A1 discloses a method of evaluating the friction generated between the tyre and ground.

WO 03/066400 A1 discloses a method of estimating a maximum friction coefficient from the knowledge of forces and self-alignment torque generated in the contact area of a tire.

SUMMARY OF THE INVENTION

The Applicant has dealt with the problem of finding a method enabling the potential friction between the tyre and the rolling surface to be determined (under predetermined vertical-load conditions, pressure, speed, wear, etc.) without the necessity to reach high slippages.

The Applicant has found that through measurement of the tangential deformation of the inner surface of the tyre and application, by analogy, of some notions resulting from the so-called "brush model" (to be better described in the following) for the purpose of identifying some significant points of the signal representative of such a deformation, it is possible to define one or more indices that are correlated with the potential friction between the tyre in question and the respective rolling surface in the use conditions to which the tyre is submitted.

In other words, by detecting a signal representative of the tangential deformation of a portion of the inner surface of the tyre in the footprint area and in the neighbourhood of said area, and identifying some significant points thereof, it is possible to determine the potential friction between tyre and rolling surface, without leading the tyre to high slippages.

In accordance with a first aspect, the invention relates to a method of determining the potential friction between a vehicle tyre and a rolling surface according to claim 1.

In accordance with a second aspect, the invention relates to a system for determining the potential friction between a vehicle tyre and a rolling surface according to claim 9.

Preferred embodiments are set forth in dependent claims 2-8 and 10-15.

Preferably, said at least one signal is representative of the deformation amount of the portion of said inner surface.

Preferably, said deformation is detected also in a radial direction.

Preferably, said at least one signal is a accelerometric signal, representative of the acceleration experienced by said portion of inner surface due to said deformation.

Preferably said acceleration is detected also in a radial direction.

The Applicant has found that a deformation in the tangential direction, and the related acceleration experienced by the monitored tyre portion, can be correlated in a particularly reliable manner with the potential friction between tyre and rolling surface.

Preferably, the signal representative of the deformation of the inner surface of the tyre is filtered in order to eliminate the harmonics higher than the 200th harmonic, and more preferably the harmonics higher than the 100th harmonic.

In this way, those signal portions describing the so-called "macrodeformation" of the tyre (or of the tyre liner) are processed, i.e. the deformation caused by deflection of tyre 1 in the contact area between tyre and rolling surface and in the regions adjacent thereto.

Further features and advantages will become more apparent from the detailed description of a preferred and non-limiting embodiment of the invention.

This description is taken hereinafter with reference to the accompanying drawings, also given by way of non-limiting example, in which:

- Fig. 1 shows friction/slippage curves relating to different interaction conditions between tyre (under given operating conditions) and rolling surface, corresponding to different values of potential friction;
- Fig. 2 diagrammatically shows a vehicle tyre;
- Figs. 3-6 show exemplary graphs used in the method and system according to the invention;
- Fig. 7 is a block diagram of a system according to the invention;
- Fig. 8 diagrammatically shows the behaviour of a vehicle tyre during rolling of same, represented according to the "brush model";
- Fig. 9 shows a graph representative of a correlation between an example of parameter representative of the grip between tyre and rolling surface and the related potential friction.

With reference to the drawings, a tyre for vehicle wheels has been generally identified by reference numeral 1.

Tyre 1 (Fig. 2) is mounted on a rim 2, in turn mounted on a hub 3; through hub 3, tyre 1 is mounted on a vehicle (not shown) to enable movement of same.

During the vehicle movement, tyre 1 rolling on a rolling surface 5 (a road surface, for example) is submitted to a displacement in a longitudinal direction X that is substantially parallel to the rolling surface 5.

The rolling direction of tyre 1 is denoted by arrow F in Fig. 2.

Tyre 1 is in contact with the rolling surface 5 in the so-called "footprint area" 4; the latter is defined between a first and a second longitudinal end 4a, 4b.

The method according to the invention first of all comprises a step of detecting at least one signal S1 representative of a deformation of an inner surface 8 of tyre 1.

To this aim, a detection device 110 is associated with the inner surface 8 of tyre 1. Preferably, the detection device 110 is mounted on the inner surface 8 of tyre 1, by a coupling and/or support device.

The inner surface 8 can be the liner of tyre 1 for example, and in particular the liner portion corresponding to the position of the belt layers disposed under the tyre tread.

Preferably, the detection device 110 comprises an accelerometer. In this case, signal S1 is an accelerometric signal, representative of the acceleration experienced, due to deformation, by the tyre portion monitored by the accelerometer; starting from the accelerometric signal, a corresponding derived related to the deformation amount can be obtained, through operations of integration of signal S1, for example.

Alternatively, signal S1 can be directly representative of the speed connected to deformation, or of the deformation amount of said inner surface 8. The missing data (deformation amount and acceleration experienced by the tyre portion associated with the detection device 110 in the first case, or acceleration alone in the second case) can be obtained through operations of integration and/or derivation of signal S1.

Detection of signal S1 preferably takes place at least at the footprint area 4, and in the regions adjacent thereto.

In fact, as clarified in the following, the potential friction $\mu$pot between tyre 1 and rolling surface 5 is determined as a function of the deformation of tyre 1 in the neighbourhood of the footprint area 4.

Signal S1 is representative of the deformation in the tangential direction of the inner surface 8 of tyre 1. In combination, the radial direction can be selected.

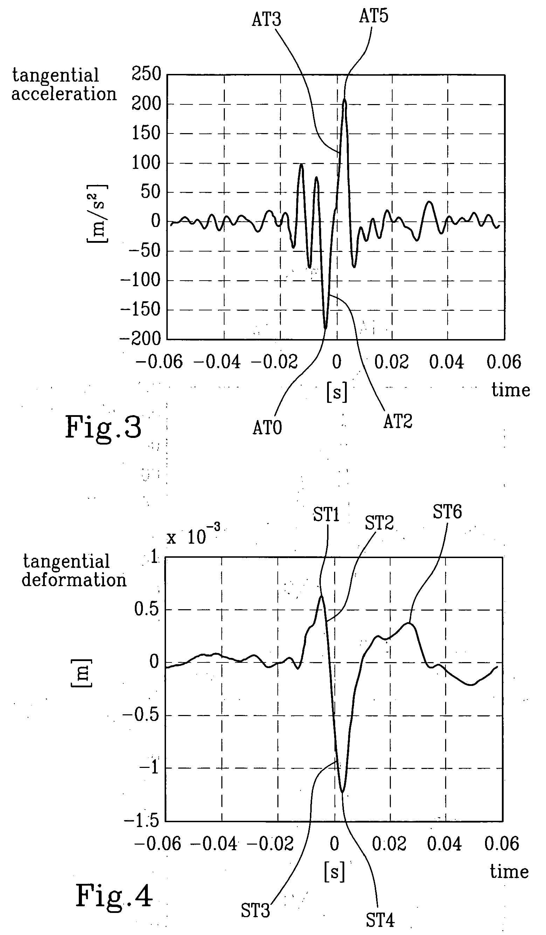

Fig. 3 shows a signal representative of the acceleration in the tangential direction, following a filtering operation to be better described in the following.

Fig. 4 shows the course of the tangential deformation in time of the inner surface 8 of tyre 1, obtained from a dual integration of the accelerometric signal represented in Fig. 3.

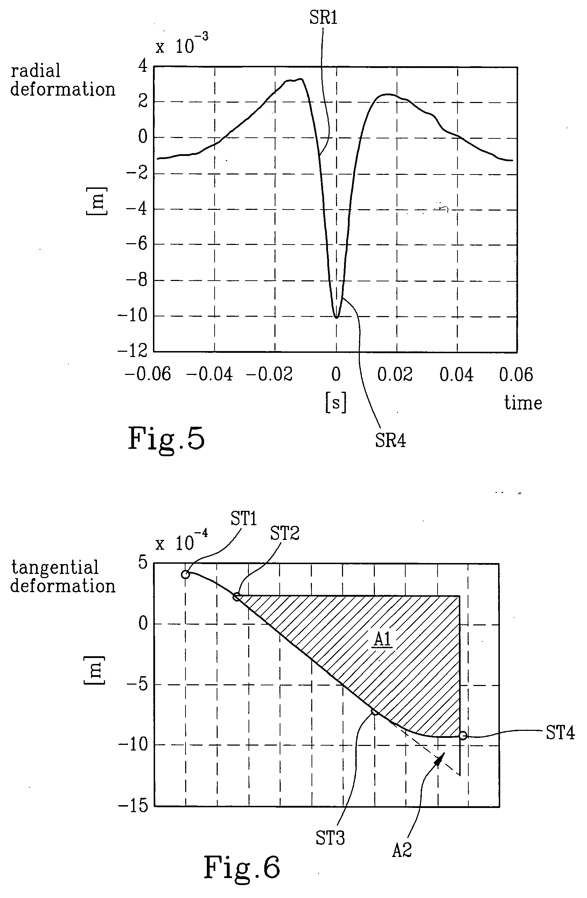

Fig. 5 on the contrary, shows the course of the radial deformation in time of the inner surface 8, obtained from a dual integration of a corresponding radial accelerometric signal (not shown).

The method according to the invention comprises a step of processing signal S1 for identifying:

- a point substantially corresponding to a start of the footprint area 4 and a point substantially corresponding to an end of the footprint area 4; these points can substantially correspond to a point of absolute maximum AT5, ST1 and a point of absolute minimum AT0, ST4 of said at least one signal S1;
  and one or more of the following significant points:
- a start point ST2 and an end point ST3 of the linearity region of the deformation of said inner surface 8 defined within said footprint area 4;
- a point ST6 corresponding to a maximum deformation, in absolute value, subsequent in time to the end of said footprint area 4.

These points are represented in Figs. 3, 4, 6.

In particular, Fig. 6 represents an enlarged portion of the graph in Fig. 4 that better highlights the linear section of the signal portion S1 included between the maximum and minimum of the deformation in the tangential direction.

For identifying the coordinates of the significant points, the following notation will be used: a first letter identifies the deformation amount "S" or the related acceleration "A"; a second letter identifies the detected signal in the tangential "T" or radial "R" directions; a subsequent numeral identifies the type of significant point according to the list given above; a subscript "x" or "y" indicates whether the abscissa or ordinate of the point in question is respectively considered.

Therefore, for instance, the ordinate of the absolute-minimum point of the tangential deformation of the inner surface 8 will be indicated by reference $ST4_y$.

The linearity region is defined as the region in which the curve slope is substantially constant, i.e. the first derivative of the curve in such a region has variations smaller than 5%, and preferably smaller than 2%.

The succession and positioning of the significant points depend on the rotation direction of tyre 1 and the mounting direction of the detection device used. Should one of these directions be reversed, there would be an arrangement of significant points in mirror image relationship with that shown in the figure, wherein each maximum is replaced by a minimum and vice versa, and consequently the angular coefficient of the linearity region changes its sign.

Preferably, signal S1, after being detected and before being further processed for identification of the aforesaid significant points, is filtered in a frequency band lower than a predetermined threshold frequency. The latter is preferably equal to the angular speed $\Omega$ of tyre 1 multiplied by a factor not higher than 200, and preferably not higher than 100. Practically, the first 100 (or 200) harmonics of signal S1 are taken into account.

By filtering the signal in this harmonics range it is possible to detect the linearity region in a sufficiently precise manner without using very high sampling/filtering frequencies, as obtaining of said frequencies would require an important processing capacity of the detection device 110. These processing capacities are on the contrary very limited, in particular when feeding of the detection device 110 is supplied by a generator capable of producing electric energy by conversion of the mechanical energy due to rolling of the tyre on the rolling surface.

By way of example, should the vehicle travel to a speed of about 100 km/hour, the threshold frequency can be of about 1500-2000 Hz.

For instance, filtering can be carried out between a first frequency equal to the angular speed $\Omega$ multiplied by 1.5, and a second frequency equal to the angular speed multiplied by 100.

The curve represented in Fig. 3 shows signal S1, representative of the tangential acceleration, filtered as described above.

The method according to the invention further comprises a step of determining, as a function of at least one coordinate of at least one of said significant points, a parameter P representative of the grip between tyre 1 and rolling surface 5.

This processing is carried out by use, by analogy, of some notions derived from the so-called "brush model" that is a model commonly used for analytically describing the interaction between tyre 1 and rolling surface 5.

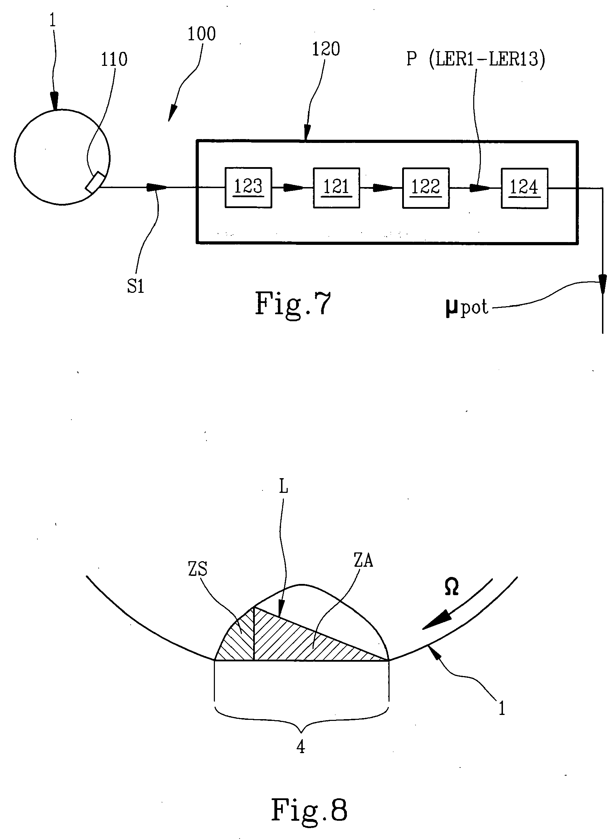

More particularly, in the known contact model, known in the literature as "brush model", it is provided that the tyre deformability be restricted to the tread band alone and that the tread be represented through a series of "brush" elements, characterised by a stiffness that, in the simplest case, is deemed constant. The complexity of the model can obviously be incremented at will, but with reference to the simplest scheme, assuming that the stiffness of the tread is constant and that the longitudinal slippage alone is present, the deformation in the tangential direction of the tread has a linear course in the grip region ZA and a course closely following the local pressure distribution in the slippage region ZS, as diagrammatically shown in Fig. 8.

In the grip section ZA it is assumed that the compound accumulates a deformation following a linear law L; moreover the slope of the grip section ZA is linearly correlated with the imposed longitudinal slippage. By identifying the information correlated with the extension of the grip region ZA in relation to the length of the footprint area 4, with the inclination of the linear section L, with the extension of the nonlinear section in relation to the extension of the footprint area 4, it is possible to obtain indications about the footprint portion that is in grip relationship with the ground, and therefore quantify the actual engagement of the tyre, i.e. the degree of utilisation of same.

According to the Applicant, the significant points listed above by way of example and correlated with the deformation of the inner surface 8 of tyre 1, can correspond, by analogy, to the magnitudes considered in the brush model, in the following manner:

- the absolute-maximum and absolute-minimum points of the tangential acceleration AT5, AT0 and/or of the tangential deformation ST1, ST4 can identify the longitudinal ends 4a, 4b of the footprint area 4;
- the extremities of the linearity region ST2, ST3 can identify, within the footprint area 4, the actual grip region between tyre 1 and rolling surface 5, in opposition to the so-called slippage region ZS;
- the absolute-maximum and absolute-minimum point ST6 of the tangential deformation subsequent in time to the end of the footprint area 4 can represent to which extent the tyre deformation, following interaction with the rolling surface, has repercussions on the tyre after its coming out of the footprint area 4.

It is to be noted that, with point ST6 reference is made to a maximum or minimum of the tangential deformation, for the above mentioned reasons relating to the rotation direction of the tyre and the mounting direction of the sensor on the liner.

In the embodiment herein described, it is in particular a maximum point (Fig. 4).

Generally, for identifying point ST6, even the absolute value alone of the ordinate of same could be taken into account; then when the coordinates of this point are used in the following processing operations, it may be necessary to also take into consideration the true sign of the ordinate $ST6_y$.

In the light of the above, the aforesaid parameter P representative of the grip between tyre 1 and rolling surface 5 can be calculated following one or more of the following formulae (taking into account the above specified notation). The following list is not exhaustive but only given by way of example of a series of parameters that can be drawn from the coordinates of the above listed significant points, and can be correlated with the grip conditions between tyre and rolling surface.

$$LER1 = \frac{ST3_x - ST2_x}{ST5_x - ST0_x}$$

Index LER1 represents the extension, on the time scale, of the linear region of tangential deformation relative to the overall length of the footprint area 4; according to the brush model, this information is correlated with the extension of the actual grip area ZA of tyre 1 on the rolling surface 5.

$$LER2 = \frac{ST3_y - ST2_y}{ST3_x - ST2_x}$$

Index LER2 represents the slope of the linear section L of the tangential deformation in the footprint area 4. This slope can be correlated with slippage.

$$LER3 = \frac{A1}{A1 + A2}$$

Index LER3 is the ratio between the area A1 subtended by the tangential deformation and the area A1+A2 subtended by the tangential deformation if the same were fully linear (see Fig. 6). The information supplied by index LER3 is the same as that supplied by index LER1.

$$LER4 = A2$$

Index LER 4 is based on considerations similar to those subtended by index LER3, while only the extension of area A2 (defined as above stated) is considered.

$$LER5 = \frac{ST4_y - ST1_y}{SR4_y - SR1_y}$$

Index LER5 defines the ratio between the maximum tangential deformation and the radial deformation at the point of maximum tangential deformation (points SR4 and SR1 are shown in Fig. 5 and are the points on the radial deformation curve having the same abscissa or time instant, as ST4 and ST1): this ratio can be indicative of the ratio between the tangential effort and normal pressure in the slippage region ZS.

$$LER6 = \frac{E\lfloor AT3_y - AT5_y \rfloor}{Limp \cdot \Omega^2}$$

Index LER6 represents the tangential acceleration average after loss of linearity, i.e. the tangential acceleration average measured between points AT3 and AT5: point AT3 is the point on the curve representative of the tangential acceleration, having the same abscissa as the end point ST3 of the linearity region of the tangential deformation. Point AT5, instead, is the point of absolute maximum of the tangential deformation.

Under low-grip conditions there may be a higher peak of tangential acceleration at the exit due to less energy dispersed by friction in the slippage region; use of the mean value enables spreading of the obtained values to be reduced.

The average relates to the values taken by the acceleration in the interval [AT3, AT5].

The index is normalised to the longitudinal extension Limp of the footprint area 4 and the angular speed of the tyre to the square ($\Omega^2$); the term to the makes the index dimensionless.

The longitudinal extension Limp of the footprint area 4 can be for instance calculated as a function of the angular speed $\Omega$ of tyre 1, the mean radius R of tyre 1, and the difference between the abscissas of the absolute maximum and absolute minimum of the tangential acceleration AT5, AT0 (the last-mentioned difference represents the duration of the time interval during which the detection device 110 is at the footprint area 4), according to the relation:

$$Limp = \Omega \cdot R \cdot (AT5_x - AT0_x)$$

The angular speed $\Omega$ of tyre 1 can be detected by the same signal S1 by known methods (for instance, measuring the time distance between two significant points at different tyre revolutions), or by other detection systems present on the vehicle.

$$LER7 = \frac{\sigma \lfloor AT3_y - AT2_y \rfloor}{Limp \cdot \Omega^2}$$

Index LER7 represents the mean-square-value of the tangential acceleration in the region in which the tangential deformation has a substantially linear course. The index is normalised to the longitudinal extension of the footprint area 4 (determined as above stated, for example) and to the angular speed of the tyre to the square ($\Omega^2$); the term to the denominator represents an acceleration and therefore makes the index dimensionless.

$$LER8 = \frac{E \lfloor AT2_y - AT0_y \rfloor}{Limp \cdot \Omega^2}$$

Index LER8 represents the average of the tangential acceleration entering the footprint area 4, before the linearity region; point AT2 is the point of the curve representative of the acceleration in the tangential direction having the same abscissa as the start point ST2 beginning the linear region of deformation in the tangential direction.

Under low-grip conditions there can be a lower acceleration peak at the entry because, with less grip, deceleration of the ideally-considered individual block is more gradual. In this case too the mean value is used for reducing spreading of the obtained values.

The average is calculated on the values taken by the acceleration in the interval [AT2, AT0].

The index is normalised to the longitudinal extension of the footprint area 4 (determined as above stated, for example) and to the angular speed of the tyre to the square ($\Omega^2$); the term to the denominator represents an acceleration and therefore makes the index dimensionless.

$$LER9 = \frac{AT5_y}{Limp \cdot \Omega^2}$$

Index LER9 is a function of the ordinate of the tangential acceleration maximum AT5 after loss of linearity; in particular, this index is substantially proportional to the ordinate of this maximum point. Under low-grip conditions, the tangential acceleration peak at the exit can be higher.

The index is normalised to the longitudinal extension of the footprint area 4 (determined as above stated, for example) and to the angular speed of the tyre to the square ($\Omega^2$); the term to the denominator represents an acceleration and therefore makes the index dimensionless.

$$LER10 = \frac{AT0_y}{Limp \cdot \Omega^2}$$

Index LER10 is a function of the ordinate of the tangential acceleration minimum AT0 before the linearity region; in particular, this index is substantially proportional to the ordinate of this minimum point. Under low-grip conditions, a lower tangential acceleration peak at the entry is expected since, with less grip, the deceleration of the ideally-considered individual block is more gradual.

The index is normalised to the longitudinal extension of the footprint area 4 (determined as above stated, for example) and to the angular speed of the tyre to the square ($\Omega^2$); the term to the denominator represents an acceleration and therefore makes the index dimensionless.

It is to be noted that, as above stated, in particular as regards indices LER9 and LER10, the words "maximum" and "minimum" might have to be reversed, should tyre 1 rotate in the opposite direction, or the sensor be mounted rotated through 180° relative to the described example.

$$LER11 = \frac{ST6_y - ST4_y}{ST1_y - ST4_y}$$

Index LER11 compares the difference between the absolute maximum and absolute minimum of the tangential deformation in the footprint area 4, with the difference between the absolute minimum of the tangential deformation and the maximum after exit from the footprint area 4.

Practically, the energy released on the individual block after exit from the footprint area 4 is compared to the energy accumulated in the linearity region.

In the case of a low grip, the index value will tend to be close to 1.

$$LER12 = \frac{ST3_x - ST2_x}{ST4_x - ST1_x}$$

Index LER12 compares the time length of the linearity region with the time distance between the maximum-minimum peaks of the tangential deformation.

The supplied information is similar to that supplied by index LER1.

$$LER13 = \frac{ST3_y - ST2_y}{ST4_y - ST0_y}$$

Index LER13 compares the width of the linearity region, measured on the ordinate axis, to the distance (always on the ordinate axis) between the absolute maximum and absolute minimum of the deformation.

The supplied information is similar to that supplied by index LER1.

The Applicant has found that the parameter P representative of the grip conditions of the tyre on the rolling surface, calculated following the above given instructions is correlated with the potential friction $\mu$pot between tyre 1 and rolling surface 5. This correlation can be expressed by preset simple functions or tables. These functions or tables can be experimentally defined by, for example, testing several tyres under different conditions and on different rolling surfaces.

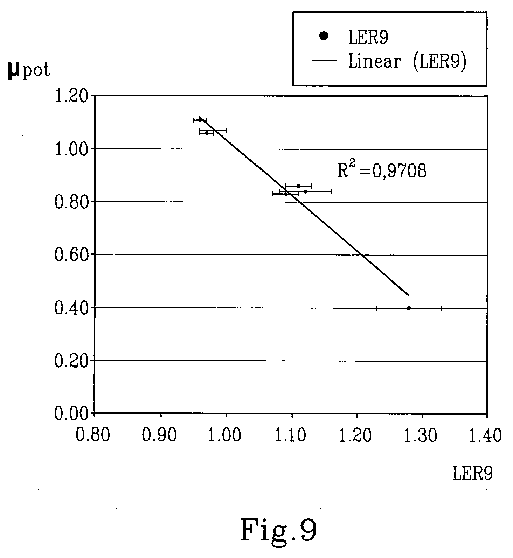

By way of example, Fig. 9 shows a graph representative of the correlation between the above mentioned parameter LER9 and the potential friction for tests carried out at 40 km/hour on different surfaces.

After experimentally identifying some points of the curve (in this case well approximated to a straight line), it is possible to carry out an operation of interpolation and obtain the desired correlation curve. In the graph in Fig. 9 the experimental values have been represented not as individual points but as horizontal segments of predetermined length, to take into account the margin of error on calculation of LER9 relating to the different measurements carried out.

The indicated value for $R^2$ represents the correlation coefficient of the interpolation straight line.

Fig. 7 shows a block diagram of a system by which the method of the invention can be put into practice.

System 100 first of all comprises a detection device 110, for detecting said signal S1.

Preferably, the detection device 110 is mounted on the inner surface 8 of tyre 1.

Preferably, the detection device 110 comprises an accelerometric sensor, so that signal S1 appears to be a signal of the accelerometric type.

Preferably, the detection device 110 supplies a first channel with a signal representative of the tangential deformation of the inner surface 8 of tyre 1.

Preferably, the detection device 110 supplies a second channel with a signal representative of the radial deformation of the inner surface 8 of tyre 1.

System 100 further comprises a processing unit 120 equipped with at least one analysis module 121, a first calculation module 122 and a second calculation module 124.

The analysis module 121 is adapted to process at least signal S1 for identifying one or more of said significant points.

The first calculation module 122 is adapted to determine, as a function of at least one coordinate of at least one significant point, a parameter P representative of the grip conditions between tyre 1 and rolling surface 5, for instance at least one of the above described indices LER1-LER13.

A second calculation module 124, being part of the processing unit 120, determines the potential friction $\mu$pot as a function of parameter P.

The output signal from the processing unit 120, representative of the potential friction $\mu$pot, can for instance be submitted to further processing operations by the control system present onboard the vehicle, so as to obtain information relevant to the conditions in which the vehicle is operating.

Preferably, the processing unit 120 also comprises a filtering module 123 adapted to filter signal S1 as above stated.

In particular, the filtering module 123 is adapted to filter signal S1 so as to exclude the harmonics higher than the 200th one, and preferably the harmonics higher than the 100th one.

The processing unit 120 can be fully positioned in tyre 1 or fully onboard the vehicle on which tyre 1 is mounted. Alternatively, the processing unit 120 can be positioned partly within tyre 1 (e.g., the filtering module 123 can be locally associated with the detection device 110), while the remaining modules can be mounted onboard the vehicle. These modules can advantageously be integrated into a control system of the vehicle already present on board.

Generally it is to be noted that in the present context and in the following claims, the processing unit 120 has been shown as divided into distinct functional modules only for the purpose of describing the functional operations of said processing unit 120 in a clear and complete manner.

Actually, the processing unit can consist of a single electronic device, suitably programmed for performing the above described functions, and the different modules can correspond to hardware units and/or software routines being part of the programmed device.

**Claims**

1. A method of determining the potential friction between a vehicle tyre and a rolling surface, a footprint area (4) being defined between said tyre (1) and said rolling surface (5), said method comprising:

   - detecting at least one signal (S1) representative of a tangential deformation of a portion of inner surface (8) of a tyre (1), said deformation being caused by rolling of said tyre (1) on said rolling surface (5);
   - processing said at least one signal (S1) so as to identify on a curve representative of said at least one signal:

· a point (AT0; ST1) substantially corresponding to a start of the footprint area (4) and a point (AT5; ST4) substantially corresponding to an end of the footprint area (4);

and one or more of the following significant points:

· a start point (ST2) and an end point (ST3) of a linearity region of the tangential deformation of said inner surface (8), defined within said footprint area (4) ;
· a point (ST6) corresponding to a maximum of the tangential deformation, in absolute value, subsequent in time to the end of said footprint area (4);

- determining as a function of at least one coordinate of at least one of said significant points, a parameter (P) representative of the grip between said tyre (1) and said rolling surface (5);
- determining as a function of said parameter (P), the potential friction ($\mu$pot) between said tyre (1) and said rolling surface (5).

2. A method as claimed in claim 1, wherein said signal (S1) is representative of the amount of the deformation of said portion of inner surface (8).

3. A method as claimed in claim 1, wherein said signal (S1) is an accelerometric signal, representative of the acceleration experienced by said portion of inner surface (8) due to said deformation.

4. A method as claimed in claim 2 or 3, wherein the amount of said deformation or, respectively, said acceleration is detected also in the radial direction.

5. A method as claimed in anyone of the preceding claims, comprising filtering of said signal (S1) in a frequency band lower than a predetermined threshold frequency.

6. A method as claimed in claim 5, wherein said threshold frequency is equal to the angular speed ($\Omega$) of said tyre (1) multiplied by a factor not higher than 200.

7. A method as claimed in claim 3 or 4, wherein said parameter (P) is a function of the ordinate of the absolute-maximum point (AT5) or the absolute-minimum point (AT0) of the acceleration experienced by said portion of inner surface (8) due to said deformation.

8. A method as claimed in claim 7, wherein said parameter (P) is substantially proportional to said ordinate.

9. A system for determining the potential friction between a vehicle tyre and a rolling surface, a footprint area (4) being defined between said tyre (1) and said rolling surface (5), said system comprising:

- a detection device (110) for detecting at least one signal (S1) representative of a tangential deformation of a portion of inner surface (8) of a tyre (1), said deformation being caused by rolling of said tyre (1) on said rolling surface (5);
- a processing unit (120) operatively associated with said detection device (110) and provided with an analysis module (122) adapted to process said at least one signal (S1) for identifying on a curve representative of said at least one signal (S1):

· a point (AT0; ST1) substantially corresponding to a start of the footprint area (4) and a point (AT5; ST4) substantially corresponding to an end of the footprint area (4);

and one or more of the following significant points:

· a start point (ST2) and an end point (ST3) of a linearity region of the tangential deformation of said inner surface (8), defined within said footprint area (4) ;
· a point (ST6) corresponding to a maximum of said tangential deformation, in absolute value, subsequent in time to the end of said footprint area;

said processing unit (120) being also provided with:

- a first calculation module (122) adapted to determine as a function of at least one coordinate of at least one of said significant points, a parameter (P) representative of the grip between said tyre (1) and said rolling surface (5);
- a second calculation module (124) adapted to determine the potential friction ($\mu$pot) between said tyre (1) and said rolling surface (5) as a function of said parameter (P).

10. A system as claimed in claim 9, wherein said signal (S1) is representative of the amount of the deformation of said portion of inner surface (8).

11. A system as claimed in claim 9, wherein said signal (S1) is an accelerometric signal, representative of an acceleration experienced by said portion of inner surface (8) due to said deformation.

12. A system as claimed in claim 10 or 11, wherein the amount of said deformation or, respectively, said acceleration is detected also in the radial direction.

**13.** A system as claimed in anyone of claims 9 to 12, wherein said processing unit (120) comprises a filtering module (123) of said signal (S1) in a frequency band lower than a predetermined threshold band.

**14.** A system as claimed in claim 13, wherein said threshold frequency is equal to the angular speed ($\Omega$) of said tyre (1) multiplied by a factor not higher than 200.

**15.** A system as claimed in claim 11 or 12, wherein said parameter (P) is a function of the ordinate of the absolute maximum point (AT5) or the absolute minimum point (AT0) of the acceleration experienced by said portion of inner surface (8) due to said deformation.

**Patentansprüche**

**1.** Ein Verfahren zur Ermittlung der potentiellen Reibung zwischen einem Fahrzeugreifen und einer Rollfläche, wobei eine Kontaktfläche (4) zwischen dem genannten Reifen (1) und der genannten Rollfläche (5) definiert ist, wobei das Verfahren Folgendes umfasst:

- die Erfassung von mindestens einem Signal (S1), das repräsentativ für eine tangentiale Deformierung eines Teils der Innenfläche (8) eines Reifens (1) ist, wobei die genannte Deformierung durch das Rollen des genannten Reifens (1) auf der genannten Rollfläche (5) verursacht wird;
- die Verarbeitung des genannten mindestens einen Signals (S1), um auf einer Kurve, die für das mindestens eine Signal repräsentativ ist, Folgendes zu ermitteln:

· einen Punkt (AT0; ST1), der im Wesentlichen dem Beginn der Kontaktfläche (4) entspricht, und einen Punkt (AT5; ST4), der im Wesentlichen dem Ende der Kontaktfläche (4) entspricht; sowie einen oder mehrere der folgenden signifikanten Punkte:
· einen Startpunkt (ST2) und einen Endpunkt (ST3) eines Linearitätsbereichs der tangentialen Deformierung der genannten Innenfläche (8), die innerhalb der genannten Kontaktfläche (4) definiert sind;
· einen Punkt (ST6), der dem Maximum der tangentialen Deformierung entspricht, als Absolutwert, der zeitlich dem Ende der genannten Kontaktfläche (4) nachfolgt;

- die Ermittlung eines Parameters (P), der für die Haftung zwischen dem genannten Reifen (1) und der genannten Rollfläche (5) repräsentativ ist, als Funktion mindestens einer Koordinate von mindestens einem der genannten Punkte;
- die Ermittlung der potentiellen Reibung ($\mu$pot) zwischen dem genannten Reifen (1) und der genannten Rollfläche (5) als Funktion des genannten Parameters (P).

**2.** Ein Verfahren nach Anspruch 1, wobei das genannte Signal (S1) für das Ausmaß der Deformierung des genannten Teils der Innenfläche (8) repräsentativ ist.

**3.** Ein Verfahren nach Anspruch 1, wobei das genannte Signal (S1) ein Beschleunigungsmesssignal ist, das für die Beschleunigung, die der genannte Teil der Innenfläche (8) aufgrund der genannten Deformierung erfährt, repräsentativ ist.

**4.** Ein Verfahren nach einem der Ansprüche 2 oder 3, wobei das Ausmaß der genannten Deformierung bzw. die genannte Beschleunigung auch in radialer Richtung erfasst wird.

**5.** Ein Verfahren nach einem der vorgenannten Ansprüche, umfassend das Filtern des genannten Signals (S1) in einem Frequenzbereich unter der vorgegebenen Schwellenfrequenz.

**6.** Ein Verfahren nach Anspruch 5, wobei der genannte Frequenzschwellenwert gleich der Winkelgeschwindigkeit (Q) des genannten Reifens (1) multipliziert mit einem Faktor nicht höher als 200 ist.

**7.** Ein Verfahren nach einem der Ansprüche 3 oder 4, wobei der genannte Parameter (P) eine Funktion der Ordinate des absoluten Maximums (AT5) oder des absoluten Minimums (AT0) der Beschleunigung, die der genannte Teil der Innenfläche (8) aufgrund der genannten Deformierung erfährt, ist.

**8.** Ein Verfahren nach Anspruch 7, wobei der genannte Parameter (P) im Wesentlichen der Ordinate proportional ist.

**9.** Ein System zur Ermittlung der potentiellen Reibung zwischen einem Fahrzeugreifen und einer Rollfläche, wobei eine Kontaktfläche (4) zwischen dem genannten Reifen (1) und der genannten Rollfläche (5) definiert ist, wobei das genannte System Folgendes umfasst:

- eine Erfassungseinrichtung (110) zur Erfassung von mindestens einem Signal (S1), das für die tangentiale Deformierung eines Teils der Innenfläche (8) eines Reifens (1) repräsentativ ist, wobei die genannte Deformierung durch das Rollen des genannten Reifens (1) auf der genannten Rollfläche (5) verursacht wird;
- eine Verarbeitungseinheit (120), die operativ mit der genannten Erfassungseinrichtung (110) verbunden ist und mit einem Analysemodul (122) bereitgestellt wird, das für die Verarbeitung des genannten mindestens einen Signals (S1) zur Ermittlung des Folgenden auf einer Kurve, die für das genannte mindestens eine Signal (S1) repräsentativ ist, angepasst wird:

> · einen Punkt (AT0; ST1), der im Wesentlichen dem Beginn der Kontaktfläche (4) entspricht, und einen Punkt (AT5; ST4), der im Wesentlichen dem Ende der Kontaktfläche (4) entspricht; und einen oder mehrere der folgenden signifikanten Punkte:
> · einen Startpunkt (ST2) und einen Endpunkt (ST3) eines Linearitätsbereichs der tangentialen Deformierung der genannten Innenfläche (8), die innerhalb der genannten Kontaktfläche (4) festgelegt ist;
> · einen Punkt (ST6), der dem Absolutwert des Maximums der genannten tangentialen Deformierung zeitlich dem Ende der genannten Kontaktfläche nachfolgend entspricht;

wobei die genannte Verarbeitungseinheit (120) außerdem Folgendes umfasst:

> - ein erstes Berechnungsmodul (122), das zur Ermittlung eines Parameters (P), der für die Haftung zwischen dem genannten Reifen (1) und der genannten Rollfläche (5) repräsentativ ist, als Funktion mindestens einer Koordinate von mindestens einem der genannten signifikanten Punkte adaptiert wird;
> - ein zweites Berechnungsmodul (124), das zur Ermittlung der potentiellen Reibung ($\mu$pot) zwischen dem genannten Reifen (1) und der genannten Rollfläche (5) als Funktion des genannten Parameters (P) angepasst wird.

**10.** Ein System nach Anspruch 9, wobei das genannte Signal (S1) für das Ausmaß der Deformierung des genannten Teils der Innenfläche (8) repräsentativ ist.

**11.** Ein System nach Anspruch 9, wobei das genannte Signal (S1) ein Beschleunigungsmesssignal ist, das für eine Beschleunigung, die der genannte Teil der Innenfläche (8) aufgrund der genannten Deformierung erfährt, repräsentativ ist.

**12.** Ein System nach einem der Ansprüche 10 oder 11, wobei das Ausmaß der genannten Deformierung bzw. der genannten Beschleunigung auch in radialer Richtung erfasst wird.

**13.** Ein System nach einem der Ansprüche 9 bis 12, wobei die genannte Verarbeitungseinheit (120) ein Filtermodul (123) für das genannte Signal (S1) mit einem Frequenzbereich umfasst, der niedriger als der vorgegebene Schwellenbereich ist.

**14.** Ein System nach Anspruch 13, wobei der genannte Schwellenfrequenzwert gleich der Winkelgeschwindigkeit ($\Omega$) des genannten Reifens (1) multipliziert mit einem Faktor nicht höher als 200, ist.

**15.** Ein System nach einem der Ansprüche 11 oder 12, wobei der genannte Parameter (P) eine Funktion der Ordinate des absoluten Maximumpunktes (AT5) oder des absoluten Minimumpunktes (AT0) der Beschleunigung ist, die der genannte Teil der Innenfläche (8) aufgrund der Deformierung erfährt.

## Revendications

**1.** Procédé pour déterminer le frottement potentiel entre un pneu de véhicule et une surface de roulement, une zone d'empreinte (4) étant définie entre ledit pneu (1) et ladite surface de roulement (5), ledit procédé comprenant :

> - la détection d'au moins un signal (S1) représentatif d'une déformation tangentielle d'une partie de surface interne (8) d'un pneu (1), ladite déformation étant causée par le roulement dudit pneu (1) sur ladite surface de roulement (5) ;
> - le traitement d'au moins l'un desdits signaux (S1) afin d'identifier sur une courbe représentative d'au moins l'un desdits signaux :
>
> > · un point (AT0 ; ST1) correspondant sensiblement à un départ de la zone d'empreinte (4) et un point (AT5 ; ST4) correspondant sensiblement à une extrémité de la zone d'empreinte (4)
>
> et un ou plusieurs des points significatifs suivants :
>
> > · un point de départ (ST2) et un point d'arrivée (ST3) d'une région de linéarité de la déformation tangentielle de ladite surface interne (8), définie à l'intérieur de ladite zone d'empreinte (4) ;
> > · un point (ST6) correspondant à un maximum de la déformation tangentielle, en valeur absolue, postérieure à l'extrémité de ladite zone d'empreinte (4) ;
>
> - la détermination, en fonction d'au moins une coordonnée, d'au moins l'un desdits points significatifs, d'un paramètre (P) représentatif de l'adhérence entre ledit pneu (1) et ladite surface de roulement (5) ;

- la détermination, en fonction dudit paramètre (P), du frottement potentiel ($\mu$pot) entre ledit pneu (1) et ladite surface de roulement (5).

**2.** Procédé selon la revendication 1, au cours duquel ledit signal (S1) est représentatif de l'ampleur de la déformation de ladite partie de surface interne (8).

**3.** Procédé selon la revendication 1, au cours duquel ledit signal (S1) est un signal accélérométrique, représentatif de l'accélération enregistrée par ladite partie de surface interne (8) suite à ladite déformation.

**4.** Procédé selon la revendication 2 ou 3, au cours duquel l'ampleur de ladite déformation, ou respectivement de ladite accélération, est détectée également dans la direction radiale.

**5.** Procédé selon l'une quelconque des revendications précédentes, comprenant le filtrage dudit signal (S1) dans une bande de fréquence inférieure à une fréquence seuil prédéterminée.

**6.** Procédé selon la revendication 5, au cours duquel ladite fréquence seuil est égale à la vitesse angulaire ($\Omega$) dudit pneu (1) multipliée par un facteur n'excédant pas 200.

**7.** Procédé selon la revendication 3 ou 4, au cours duquel ledit paramètre (P) est une fonction de l'ordonnée du point maximum absolu (AT5) ou du point minimum absolu (AT0) de l'accélération enregistrée par ladite partie de surface interne (8) suite à ladite déformation.

**8.** Procédé selon la revendication 7, au cours duquel ledit paramètre (P) est sensiblement proportionnel à ladite ordonnée.

**9.** Système pour déterminer le frottement potentiel entre un pneu de véhicule et une surface de roulement, une zone d'empreinte (4) étant définie entre ledit pneu (1) et ladite surface de roulement (5), ledit système comprenant :

- un dispositif de détection (110) pour détecter au moins un signal (S1) représentatif d'une déformation tangentielle d'une partie de surface interne (8) d'un pneu (1), ladite déformation étant causée par le roulement dudit pneu (1) sur ladite surface de roulement (5) ;
- une unité de traitement (120) opérationnellement associée audit dispositif de détection (110) et dotée d'un module d'analyse (122) conçu pour traiter au moins l'un desdits signaux (S1) pour identifier sur une courbe représentative d'au moins l'un desdits signaux (S1) :

. un point (AT0 ; ST1) correspondant sensiblement à un point de départ de la zone d'empreinte (4) et un point (AT5 ; ST4) correspondant sensiblement à un point d'arrivée de la zone d'empreinte (4) ;

et un ou plusieurs des points significatifs suivants :

· un point de départ (ST2) et un point d'arrivée (ST3) d'une région de linéarité de la déformation tangentielle de ladite surface interne (8), définie à l'intérieur de ladite zone d'empreinte (4) ;
· un point (ST6) correspondant à un maximum de ladite déformation tangentielle, en valeur absolue, postérieure à l'extrémité de ladite zone d'empreinte ;

ladite unité de traitement (120) comprenant également :

- un premier module de calcul (122) conçu pour déterminer, en fonction d'au moins une ordonnée d'au moins l'un desdits points significatifs, un paramètre (P) représentatif de l'adhérence entre ledit pneu (1) et ladite surface de roulement (5) ;
- un deuxième module de calcul (124) conçu pour déterminer le frottement potentiel ($\mu$pot) entre ledit pneu (1) et ladite surface de roulement (5) en fonction dudit paramètre (P).

**10.** Système selon la revendication 9, dans lequel ledit signal (S1) est représentatif de l'ampleur de la déformation de ladite partie de surface interne (8).

**11.** Système selon la revendication 9, dans lequel ledit signal (S1) est un signal accélérométrique, représentatif de l'accélération enregistrée par ladite partie de surface interne (8) suite à ladite déformation.

**12.** Système selon la revendication 10 ou 11, dans lequel l'ampleur de ladite déformation, ou respectivement de ladite accélération, est détectée également dans la direction radiale

**13.** Système selon l'une quelconque des revendications 9 à 12, dans lequel ladite unité de traitement (120) comprend un module de filtration (123) dudit signal (S1) dans une bande de fréquence inférieure à une bande seuil prédéterminée.

**14.** Système selon la revendication 13, dans lequel ladite fréquence seuil est égale à la vitesse angulaire ($\Omega$) dudit pneu (1) multipliée par un facteur n'excédant pas 200.

**15.** Système selon la revendication 11 ou 12, dans lequel ledit paramètre (P) est une fonction de l'ordonnée du point maximum absolu (AT5) ou du point minimum absolu (AT0) de l'accélération enregistrée par ladite partie de surface interne (8) suite à ladite déformation.

Fig.1

Fig.2

Fig.3

Fig.4

Fig.5

Fig.6

Fig.7

Fig.8

Fig.9

**EP 2 379 380 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1897706 A
- WO 2008065465 A1
- WO 03066400 A1